# EUROPEAN PATENT SPECIFICATION

(11) **EP 1 194 328 B1**
(45) Date of publication and mention of the grant of the patent: **23.02.2005**
(21) Application number: 00929320.0
(22) Date of filing: 23.05.2000
(51) Int. Cl.: B62H 1/12

(54) **TWO-WHEELED CYCLE WITH SUPPORT WHEELS**
FAHRRAD MIT STÜTZRÄDER
BICYCLETTE AVEC ROUES DE SOUTIEN

(30) Priority: 25.05.1999 DK 72599
(43) Date of publication of application: 10.04.2002
(73) Proprietor: Drachmann, Florian Michael, 4014 Stavanger (NO)
(72) Inventor: Drachmann, Florian Michael, 4014 Stavanger (NO)
(74) Representative: Holme, Edvard
(86) International application number: PCT/DK2000/000276
(87) International publication number: WO 2000/071409

(56) References cited:
- DE-A- 1 680 538
- US-A- 601 109
- US-A- 610 536
- US-A- 5 465 989

## Description

The invention relates to a two-wheeled vehicle having a front wheel and a rear wheel supported on a base such as a road surface, comprising, two supporting wheels which are movably mounted on the vehicle, a seat for the person riding, said seat being movably mounted on the vehicle, and a flexible rod system which interconnects the support wheels and the seat, said flexible rod system being arranged in such a way that the supporting wheels are moved between two positions when the seat is moved.

A two-wheeled cycle is typically having two pedals which the cyclist during riding pedals with his legs. The energy generated in this way is transmitted via a chain drive to the rear wheel of the bicycle, this wheel is thus the driving wheel of the bicycle.

During riding the cyclist is usually seated on a seat or a saddle which generally is placed above the pedals. Thereby the cyclist will assume an upright position which allows the cyclist to conveniently support with one or both legs on the road surface when riding is stopped and the bicycle therefore no more is able keep the balance of its own accord.

However, there are bicycles, so-called recumbents, where the pedals are placed in front of the seat. During riding the cyclist will then assume a recumbent position which makes it difficult to support with one or both legs on the ground when riding is stopped.

There are recumbents which are provided with a canopy for affording the cyclist protection against wind and weather. Such a canopy will often be in the way of the cyclist getting to support on the ground with the required swiftness and safety at stop.

If the cycle is provided with three or four driving wheels, it will however always stand stabile on the ground without the cyclist at the same time having to trouble himself to support on the ground in order to get the cycle to keep the balance when it is standing still. The cyclist can therefore conveniently let the feet remain on the pedals when he e.g. stops at a red light and immediately be ready to set into motion when the light changes to green.

Three- or four-wheeled cycles are however not so manoeuvrable and easy to ride as two-wheeled cycles, and to this should be added that they generally also have a relatively complicated structure and are costly to produce.

From US Patent No. 601,109 is known a support with two support wheels for mounting on a normal two nedal bicycle. The saddle of the bicycle is mounted in a hinged way such that when pressing on the saddle the support wheel will spread. The problem to be solved in this way is to prevent the pedal cyclist on the bicycle to fall while still being in motion. The support wheels will not in any position be supporting on the driving base for the vehicle. At standstill the bicycle therefore is not in self-supporting balance.

The object of the invention is to provide a two-wheeled cycle of the kind mentioned in the opening paragraph, which is simple and inexpensive to produce and which is arranged in such a way that it at standstill easily can be put in self-supporting balance.

The novel and unique features according to the invention, whereby this is achieved, is the fact that the supporting wheels, in relation to the rotational axis of the rear wheel, have a lower supporting position, where they are supporting on said base and a higher free position where they are free of said base.

The flexible rod system can e.g. be designed in such a way that the support wheels are supporting on the road surface in at least one of the positions of the seat and are clear of the road surface in other positions of the seat. By getting the seat to move in one direction, the person riding can thereby bring the support wheels down onto the road surface and secure the vehicle stable self-support at stopping. At start the person riding can without difficulty pull the support wheels clear of the road surface by merely moving the seat in the opposite direction.

The last-mentioned manoeuvre can e.g. take place by the person riding pressing the seat backwards with the back, and the first-mentioned manoeuvre by the person riding in stead leaning forwards in the seat.

In an especially simple and inexpensive embodiment the rod system can comprise a forked frame extension for rotatable mounting of the support wheels, and also a frame serving for mounting of the seat and pivotally connected to both the axle of the rear wheel and the frame of the vehicle.

When the person riding leans forward in the seat, the distance between the axes of the support wheels and the rear wheel is increased until the support wheels support on the road surface. When the person riding leans back in the seat, said distance is decreased so that the support wheels no longer can reach the road surface.

As the rear wheel of the vehicle is connected to the frame via the pivotally mounted frame of the seat, the cycle is not stable in itself. If the support wheels are to be held in driving position, the person riding must therefore exert a backward-directed pressure on the seat. In order to avoid that the bicycle unintentionally collapses because the person during e.g. riding in free wheel downhill happens to ease this pressure, the obtained riding position can be fixed by means of a lock for locking the frame of the seat in relation to the frame.

The cyclist has to press relatively hard against the seat in order to bring the bicycle into driving position as the moment achieved thereby about the axis of the rear wheel must be at least as great as the contra-rotating moment from the weight of the person riding.

To relieve the person riding of the work of bringing the support wheels into driving position and keep them in this position, the rod system can furthermore have a spring for completely or partly compensating for the moment from the weight of the person so that the person riding is enabled to effortlessly manoeuvre with the support wheels.
In an effectively functioning embodiment the rod system can comprise a first pair of rods, each at one end rotatably carrying a support wheel and at the other end pivotally connected to the frame, and a second pair of rods pivotally connecting their respective rod of the first pair of rods to the seat which again is pivotally connected to the frame. Thereby the vehicle becomes stable in itself.

The second rod can be pivotally connected to the first rod via a sleeve which is displaceably fitted on the first rod, or the second rod can be pivotally connected to both the seat and the first rod.

Alternatively the first rod can be pivotally connected to the frame via a bearing consisting of an axle journal which displaceably engages with an oblong groove.

The first rod can be pivotally connected to the frame via a bearing with an axis which is parallel to the axis of the rear wheel or forms an angle with this axis. In the former case the driving wheels maintain their orientation in all positions. In the latter case the orientation is changed.

By letting the swivelling axis in the two bearings of the first pair of rods mutually form an angle with downward-facing peak, the support wheels are advantageously guided towards each other when they are pulled clear of the road surface, and their planes will at the same time form an acute angle with each other with rearwards-facing peak so that the wheels will aerodynamically follow the shape of the bicycle.

The invention will be explained in greater detail below, describing only exemplary embodiments with reference to the drawing, in which
Fig. 1 is a diagrammatic perspective view of a first embodiment of a bicycle with support wheels according to the invention in supporting position,
Fig. 2 is the bicycle in fig. 1 but seen from behind,
Fig. 3 is the bicycle in fig. 1 but with the support wheels in driving position,
Fig. 4 is a diagrammatic side elevational view of a second embodiment of a bicycle with support wheels according to the invention in driving position,
Fig. 5 is a view from behind of the support wheels for the bicycle in fig. 4,
Fig. 6 shows the bicycle in fig. 4 with the support wheels in supporting position,
Fig. 7 is a view from behind of the support wheels for the bicycle in fig. 6,
Fig. 8 is a diagrammatic side elevational view of a third embodiment of a bicycle with support wheels according to the invention in driving position,
Fig. 9 is a view from behind of the support wheel for the bicycle in fig. 8,
Fig. 10 shows the bicycle in fig. 8 with the support wheels in supporting position,
Fig. 11 is a view from behind of the support wheels for the bicycle in fig. 10,
Fig. 12 is a diagrammatic side elevational view of a fourth embodiment of a bicycle with support wheels according to the invention in driving position,
Fig. 13 is a view from behind of the support wheels for the bicycle in fig. 12,
Fig. 14 shows the bicycle in fig. 12 with the support wheels in supporting position, and
Fig. 15 is a view from behind of the support wheels for the bicycle in fig. 14.

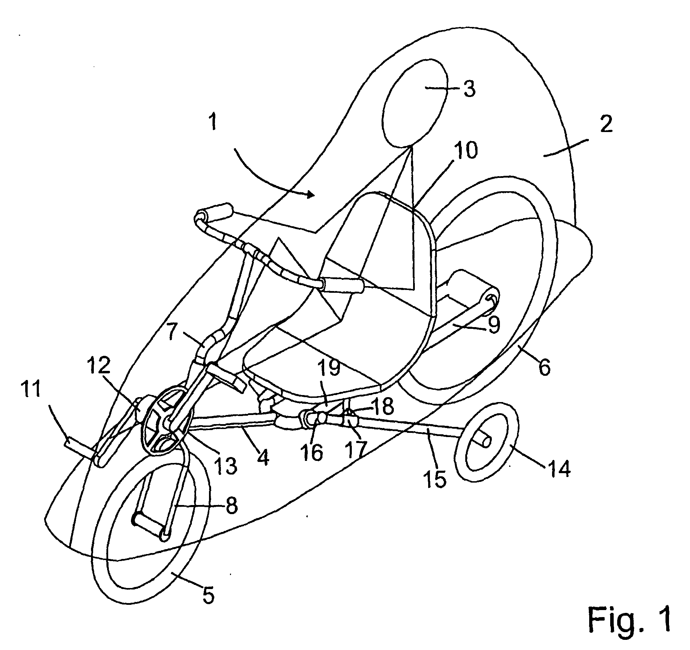

Figs. 1, 2 and 3 are diagrammatic views of a bicycle of the kind that is called a recumbent. In the following the invention is described on the basis of this kind of bicycle. The scope of protection of the invention is however not limited to be applied to a recumbent, the invention can advantageously be applied to any other kind of cycle or another two-wheeled vehicle.

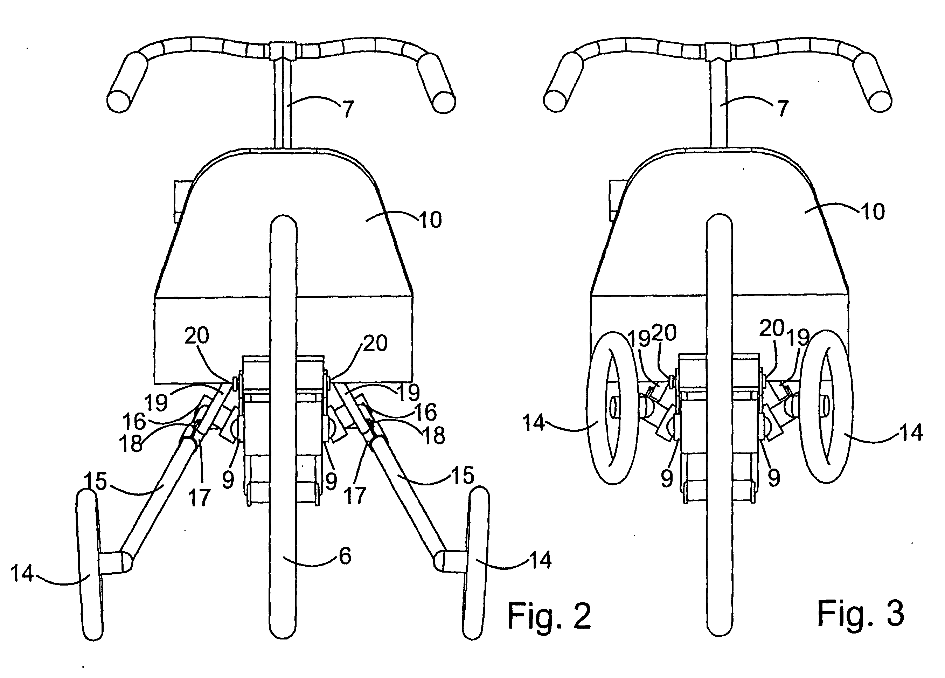

The recumbent or bicycle in figs. 1, 2 and 3 is generally indicated by the reference numeral 1. In fig. 1 the bicycle is provided with a schematically shown canopy 2 for protecting the cyclist 3 only illustrated with a single line against wind and weather. This canopy is not shown in figs. 2 and 3.

The bicycle has a frame 4, a front wheel 5 and a rear wheel 6. On the front of the frame are pivotally mounted handlebars 7 with a front fork 8 for mounting of the front wheel. At the back, the frame has a forked frame extension 9 for mounting of the rear wheel,

A seat 10 is tiltably mounted on the frame. The cyclist 3 is seated recumbently in this seat while he during riding pushes the pedals 11 in front round in a pedal crank 12 with a driving chain sprocket 13.

A chain not shown is placed over the chain sprocket 13 and a chain sprocket not shown on the rear wheel. During riding the bicycle is driven forward by the cyclist pushing the pedals round and thereby generating a power which via the above-mentioned chain and sprocket drive is transmitted to the rear wheel.

It is known that a two-wheeled cycle is balanced during riding. When it is standing still, the bicycle will however not be able to keep the balance. It will therefore overturn unless the cyclist supports with one or both legs on the ground.

When the bicycle and the cyclist, as shown in fig. 1, are encompassed by a canopy which is at least partially closed at the bottom, it will however be difficult or perhaps even impossible for the cyclist to get a chance to support on the ground in this way.

The bicycle in figs. 1, 2 and 3 is therefore according to the invention provided with support wheels which in figs. 1 and 2 are in their supporting position. Now, the cyclist does not have to trouble himself with keeping the cycle balanced at standstill. The support wheels take care of this. The cyclist does not even have to remove his feet from the pedals.

The support wheels can be taken from the supporting position in figs. 1 and 2 to the riding position in fig. 3 by means of the following arrangement.

Each support wheel 14 is rotatably mounted at the end of a swivel rod 15 which at the other end is pivotally mounted on the forked frame extension 9 of the frame 4 via a swivel bearing 16 with a swivelling axis extending obliquely upwards under an angle of e.g. 60° with a plane perpendicular to the rotational axis of the rear wheel.

On the swivel rod 15 near the swivel bearing 16 is displaceably fitted a sleeve 17 having a swivel pin 18 which is pivotally connected to a second swivel rod 19 which again is pivotally connected to a swivel bearing not shown on the bottom of the seat 10 which itself can tilt backwards and forwards about a tilting bearing 20 shown in figs. 2 and 3.

When the cyclist leans forward in a position which is natural at standstill, the seat is tilted forwards about the tilting bearing 20 whereby the support wheels 14 are lowered by the above-mentioned flexible rod system.

The operation takes place by the second swivel rod 19 being pressed down by the forward-tilting seat and during this forcing the swivel rod 15 of the support wheels to pivot about the swivel bearing 16 until the support wheels reach the ground and keep the bicycle balanced. This movement is allowed because the sleeve 17 with the swivel pin 18 at the same time is able to turn and get displaced in relation to the swivel rod 15.

At riding the cyclist will automatically press the seat backwards with his back as a reaction to the force which is necessary to push the pedals round. Thereby the seat is tilted backwards whereby the above operation takes place in reverse order with the result that the support wheels are lifted clear of the ground and will assume the riding position in fig. 3 where the bicycle functions just as any other two-wheeled cycle.

Due to the fact that the swivelling axes of the swivel bearings 16 are extending obliquely upwards, the support wheels 14 will assume the oblique position shown in fig. 3 where the support wheels advantageously are pulled closely in towards each other with an obliquely backwards-facing orientation.

It only takes modest strength to take the support wheels up and down. During riding in e.g. free wheel, the cyclist therefore only has to lean back comfortably in the seat in order to effectively be able to keep the support wheels in riding position.

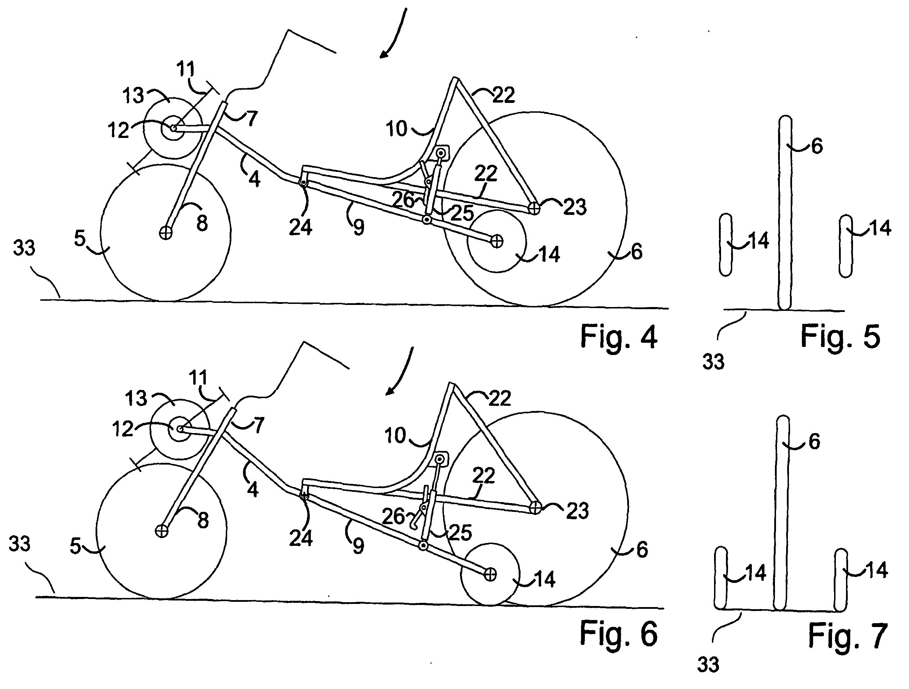

Figs. 4-7 show a second embodiment 21 of the bicycle according to the invention. Like parts are designated by the same reference numerals as in figs. 1-3.

In this case, it is the support wheels 14 that are mounted on the forked frame extension 9, whereas the seat 10 is mounted on a frame 22 which is pivotally connected to both the axle 23 of the rear wheel 6 and the frame 4 of the bicycle via a swivel bearing 24.

As it can be seen, the support wheels 14 and the rear wheel 6 are moving in such a way in relation to each other that the support wheels will assume the riding position shown in figs. 4 and 5 when the cyclist with his back is pressing the seat backwards, and the supporting position shown in figs. 6 and 7 when the cyclist is leaning forward in the seat.

The support wheels can only be kept in the riding position shown in figs. 4 and 5 when the cyclist is pressing so hard on the seat that the moment of rotation arising thereby about the axis of the rear wheel is at least as great as the contra-rotating moment from the weight of bicycle and the cyclist.

In order to relieve the cyclist of this load and allow the cyclist a comfortable riding under all circumstances, the bicycle is provided with a compression spring 25 for creating a moment of rotation which completely or partly compensates for the moment of rotation from the weight of the bicycle and the cyclist.

In addition, a check pawl 26 is serving for blocking the compression spring when the support wheels are in their riding position as shown in fig. 4. The support wheels can then not be put in the supporting position until the cyclist has manually released the pawl. This situation is seen in fig. 6.

It goes without saying that the frame 22 of the seat 10 can be locked to the frame 4 of the bicycle in any other expedient way. For example by means of a snap lock which alternately locks and unlocks.

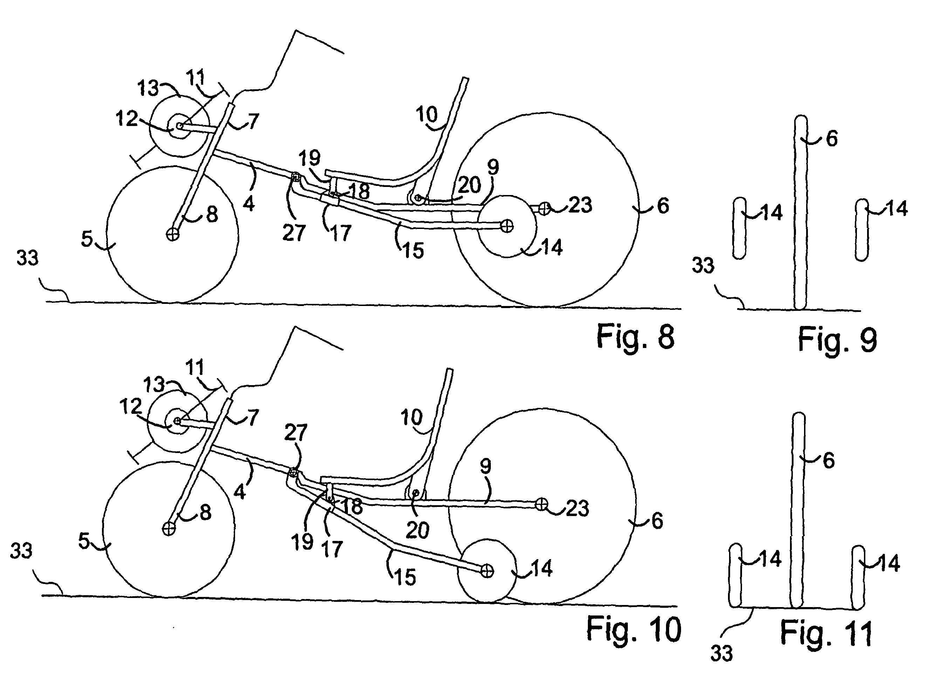

Figs. 8-11 show a third embodiment according to the invention. Also in this case are like parts designated by the same reference numerals as in figs. 1-3.

This structure moreover corresponds to that shown in figs. 1-3 with the exception that each swivel rod 15 is pivotally mounted on the frame 4 via a swivel bearing 27 with a swivelling axis which is parallel to the rotational axis of the rear wheel. The support wheels therefore do not change orientation when they are swung between the riding position shown in figs. 8 and 9 and the supporting position shown in figs. 10 and 11.

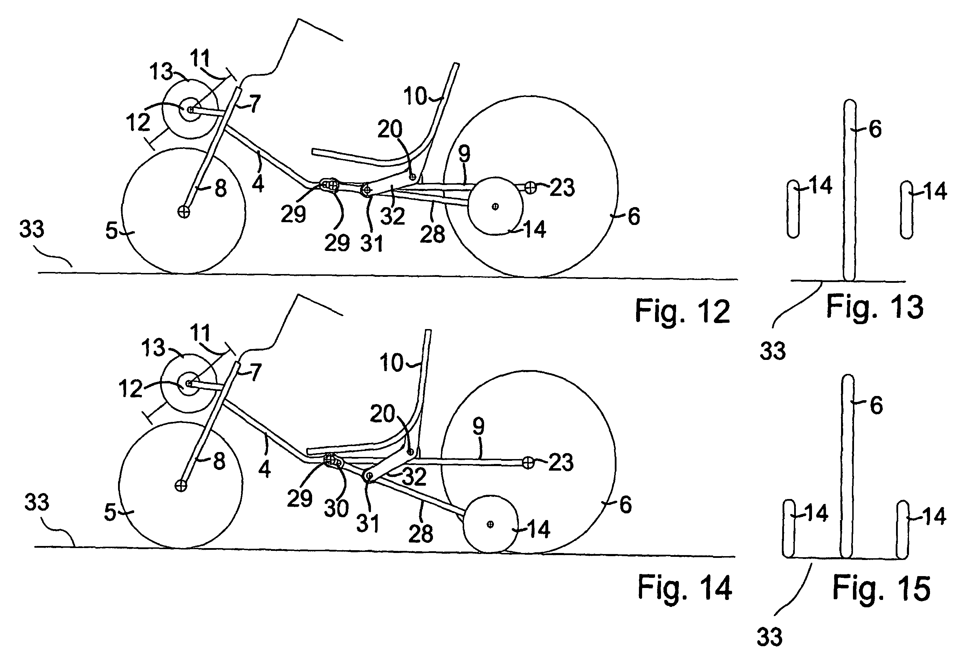

Figs. 12-15 show a fourth embodiment according to the invention and just as in the two previous embodiments, like parts are also in this case designated by the same reference numerals as in figs. 1-3.

This embodiment is a variant of the one shown in figs. 8-11. But in this case, each of the swivel rods 28 of the support wheels 14 are pivotally mounted on the frame 4 via a swivel pin 29 which pivotally and displaceably engages with a groove 30 at the end of the respective swivel rod. Furthermore, the seat 10 is rigidly connected to a rod 32 which pivotally engages with a swivel bearing 31 near the groove 30.

When the seat 10 is tilted backwards and forwards over the swivel bearing 20, the support wheels are swung back and forth between the driving position shown in figs. 12 and 13 and the supporting position shown in figs. 14 and 15 in a way corresponding to that in the previously mentioned embodiments. This swivelling movement is allowed because the swivel pins 29 during this are displaced back and forth in the grooves 30 of the swivel rods 28. The same function is obtained by instead constructing the groove in the frame and the swivel pins on the swivel rods.

It is to be noted that the rod systems shown in figs. 1-3 and 8-15 for swinging the support wheels back and forth between their riding position and supporting position are designed with a gearing that has the effect of the cyclist not having to move very much in the seat in order to get the support wheels to change position.

## Claims

1. A two-wheeled vehicle having a front wheel and a rear wheel supported on a base (33) such as a road surface, comprising,
- two supporting wheels (14) which are movably mounted on the vehicle (1),
- a seat (10) for the person (3) riding, said seat being movably mounted on the vehicle, and
- a flexible rod system (15;16;17;18;19;20) which interconnects the support wheels (14) and the seat (10), said flexible rod system being arranged in such a way that the supporting wheels are moved between two positions when the seat is moved,
**characterised in that**,
- the supporting wheels, in relation to the rotational axis of the rear wheel, have a lower supporting position, where they are supporting on said base (33) and a higher free position where they are free of said base (33).

2. A two-wheeled vehicle according to claim 1, **characterised in that** the flexible rod system (15;16;17;18; 19;20) is designed in such a way that that the supporting wheels are in their supporting position in at least one position of the seat and in their free positions in other positions of the seat.

3. A two-wheeled vehicle according to claim 1 or 2, **characterised in that** the rod system (9;22;24) comprises a forked frame extension (9) for rotatably mounting the support wheels (14), and a frame (22) serving for mounting of the seat (10) and connected to the axle (23) of the rear wheel (6) and also pivotally connected to the frame (4) of the vehicle (1).

4. A two-wheeled vehicle according to claim 1, 2 or 3, **characterised in that** the rod system (9;22;24) comprises a lock (26) for locking the frame (22) of the seat (10) in relation to the frame (4,9) when the seat (10) is in a position where the support wheels (14) are clear of the base.

5. A two-wheeled vehicle according to each of the claims 1 - 4, **characterised in that** the rod system (9;22;24) comprises a spring (25) for affecting the seat (10) with a spring power in the direction towards the positions of the seat (10) where the support wheels (14) are clear of the base.

6. A two-wheeled vehicle according to each of the claims 1 - 5, **characterised in that** the rod system (9;15;17;18;19;20) comprises a first pair of rods (15), each at one end rotatably carrying a support wheel (14) and at the other end pivotally connected to the frame (4), and a second pair of rods (19) pivotally connecting their respective rod (15) of the first pair of rods to the seat (10) which again is pivotally connected to the frame (4) via a swivel bearing (20).

7. A two-wheeled vehicle according to claim 6, **characterised in that** the second rod (19) is pivotally connected to the first rod (15) via a sleeve (17) fitted displaceably on this rod.

8. A two-wheeled vehicle according to claim 6 or 7, **characterised in that** the first rod (15) is pivotally connected to the frame (4) via a swivel pin (29) which displaceably engages with an oblong groove (30).

9. A two-wheeled vehicle according to claim 6 or 7, **characterised in that** the first rod (15) is pivotally connected to the frame (4,9) via a swivel bearing (16) with a swivelling axis forming an angle with the rotational axis of the rearmost driving wheel (6).

10. A two-wheeled vehicle according to claim 9, **characterised in that** the swivelling axes in the swivel bearings (16) of the first pair of rods (15) mutually form an angle with downward-facing peak.

## Patentansprüche

1. Ein zweirädriges Fahrzeug mit einem Vorderrad und einem Hinterrad, die von einer Grundlage (33), etwa einer Straßenfläche getragen werden, mit
- zwei Stützrädem (14), die beweglich an dem Fahrzeug (1) befestigt sind,
- einem Sitz (10) für die das Fahrzeug verwendende Person, wobei der Sitz beweglich auf dem Fahrzeug befestigt ist, und
- ein flexibles Stangensystem (15; 16; 17; 18; 19; 20), das die Stützräder (14) und den Sitz (10) miteinander verbindet, wobei das flexible Stangensystem derart angeordnet ist, dass die Stützräder zwischen zwei Positionen bewegt wird, wenn der Sitz bewegt wird,
**dadurch gekennzeichnet, dass**
- die Stützräder in Beziehung zu der Drehachse des Hinterrades eine untere Stützposition einnehmen, wo sie von der Grundlage (33) getragen werden, und eine höhere freie Position, in der sie von der Grundlage (33) frei sind.

2. Ein zweirädriges Fahrzeug nach Anspruch 1, **dadurch gekennzeichnet, dass** das flexible Stangensystem (15; 16; 17; 18; 19; 20) derart ausgebildet ist, dass die Stützräder in wenigstens einer Position des Schlitzes in ihrer Stützposition sind und in anderen Positionen des Sitzes in ihrer freien Position sind.

3. Ein zweirädriges Fahrzeug nach Anspruch 1 oder 2, **dadurch gekennzeichnet, dass** das Stangensystem (9; 22; 24) eine gegabelte Rahmenerstreckung (9) zur drehbaren Aufnahme der Stützräder hat und ein Rahmen (22) zur Aufnahme des Sitzes (10) und zum Verbinden mit der Achse (23) des Hinterrades (6) dient und ebenfalls verschwenkbar mit dem Rahmen (4) des Fahrzeugs (1) verbunden ist.

4. Ein zweirädriges Fahrzeug nach Anspruch 1, 2 oder 3, **dadurch gekennzeichnet, dass** das Stangensystem (9; 22; 24) eine Verriegelung (26) zum Verriegeln des Rahmens (22) des Sitzes (10) in Beziehung zu dem Rahmen (4, 9), wenn der Sitz (10) in einer Position ist, in der die Stützräder (14) frei von der Grundlage sind, aufweist.

5. Ein zweirädriges Fahrzeug nach jedem der Ansprüche 1 bis 4, **dadurch gekennzeichnet, dass** das Stangensystem (9; 22; 24) eine Feder (25) zum Beaufschlagen des Sitzes (10) mit einer Federkraft in Richtung auf die Positionen des Sitzes (10), in denen die Stützräder (14) frei von der Grundlage sind, aufweist.

6. Ein zweirädriges Fahrzeug nach jedem der Ansprüche 1 bis 5, **dadurch gekennzeichnet, dass** das Stangensystem (9; 15; 17; 18; 20) ein erstes Paar von Stangen (15) aufweist, die jeweils an dem anderen Ende drehbar mit dem Rahmen (4) verbunden sind und ein zweites Paar von Stangen (19), die drehbar jeweils deren jeweilige Stangen (15) des ersten Paares von Stangen mit dem Sitz (10) drehbar verbinden, der wiederum drehbar mit dem Rahmen (4) über Schwenklager (20) verbunden ist.

7. Ein zweirädriges Fahrzeug nach Anspruch 6, **dadurch gekennzeichnet, dass** die zweite Stange (19) schwenkbar mit der ersten Stange (15) über eine Buchse (17) verbunden ist, die verlagerbar auf diese Stange aufgesetzt ist.

8. Ein zweirädriges Fahrzeug nach Anspruch 6 oder 7, **dadurch gekennzeichnet, dass** die erste Stange (15) drehbar mit dem Rahmen (4) über einen Schwenkstift (29) verbunden ist, der verlagerbar in eine lange Kerbe (30) eingreift.

9. Ein zweirädriges Fahrzeug nach Anspruch 6 oder 7, **dadurch gekennzeichnet, dass** die erste Stange (15) verschwenkbar mit dem Rahmen (4, 9) über ein Schwenklager (16) mit einer Schwenkachse, die einen Winkel mit der Drehachse des hinteren Antriebsrades (6) bildet, verbunden ist.

10. Ein zweirädriges Fahrzeug nach Anspruch 9, **dadurch gekennzeichnet, dass** die Schwenkachsen in den Schwenklagem (16) des ersten Paares von Stangen (15) miteinander einen Winkel mit einer nach unten weisenden Spitze bilden.

## Revendications

1. Véhicule à deux roues doté d'une roue avant et d'une roue arrière, supporté sur une base (33) telle qu'une surface de route, comprenant :
deux roues de support (14) qui sont montées de manière mobile sur le véhicule (1),
un siège (10) pour la personne (3) qui est assise sur le véhicule, ledit siège étant monté de manière mobile sur le véhicule, et
un système de tige flexible (15 ; 16 ; 17 ; 18 ; 19 ; 20) qui interconnecte les roues de support (14) et le siège (10), ledit système de tige flexible étant agencé de sorte que les roues de support sont déplacées entre deux positions lorsque le siège est déplacé,
**caractérisé en ce que**,
les roues de support, par rapport à l'axe de rotation de la roue arrière, ont une position de support inférieure, où elles sont supportées sur ladite base (33) et une position libre supérieure où elles sont éloignées de ladite base (33).

2. Véhicule à deux roues selon la revendication 1, **caractérisé en ce que** le système de tige flexible (15 ; 16 ; 17 ; 18 ; 19 ; 20) est conçu de sorte que les roues de support sont dans leur position de support au moins dans une position du siège et dans leurs positions libre dans d'autres positions du siège.

3. Véhicule à deux roues selon la revendication 1 ou 2, **caractérisé en ce que** le système de tige (9 ; 22 ; 24) comprend une extension de châssis en fourche (9) pour monter de manière rotative les roues de support (14), et un châssis (22) servant pour monter le siège (10) et raccordé à l'essieu (23) de la roue arrière (6) et également raccordé de manière pivotante au châssis (4) du véhicule (1).

4. Véhicule à deux roues selon la revendication 1, 2 ou 3, **caractérisé en ce que** le système de tige (9 ; 22 ; 24) comprend un verrou (26) pour verrouiller le châssis (22) du siège (10) par rapport au châssis (4, 9) lorsque le siège est dans une position dans laquelle les roues de support (14) sont éloignées de la base.

5. Véhicule à deux roues selon chacune des revendications 1 à 4, **caractérisé en ce que** le système de tige (9 ; 22 ; 24) comprend un ressort (25) pour appliquer sur le siège (10) une puissance de ressort dans la direction vers les positions du siège (10) où les roues de support (14) sont éloignées de la base.

6. Véhicule à deux roues selon chacune des revendications 1 à 5, **caractérisé en ce que** le système de tige (9 ; 15 ; 17 ; 18 ; 19 ; 20) comprend une première paire de tiges (15), chacune à une extrémité supportant en rotation une roue de support (14) et à l'autre extrémité raccordée de manière pivotante au châssis (4), et une seconde paire de tiges (19) raccordant de manière pivotante leur tige respective (15) de la première paire de tiges au siège (10) qui est à nouveau raccordé de manière pivotante au châssis (4) via un palier de pivotement (20).

7. Véhicule à deux roues selon la revendication 6, **caractérisé en ce que** la seconde tige (19) est raccordée de manière pivotante à la première tige (15) via un manchon (17) monté de manière déplaçable sur cette tige.

8. Véhicule à deux roues selon la revendication 6 ou 7, **caractérisé en ce que** la première tige (15) est raccordée de manière pivotante au châssis (4) via un arbre de pivotement (29) qui se met en prise de manière déplaçable avec une rainure oblongue (30).

9. Véhicule à deux roues selon la revendication 6 ou 7, **caractérisé en ce que** la première tige (15) est raccordée de manière pivotante au châssis (4, 9) via un palier de pivotement (16) avec un axe de pivotement formant un angle avec l'axe de rotation de la roue d'entraînement située le plus en arrière (6).

10. Véhicule à deux roues selon la revendication 9, **caractérisé en ce que** les axes de pivotement dans les paliers de pivotement (16) de la première paire de tiges (15) forment mutuellement un angle avec une crête orientée vers le bas.
